# EUROPÄISCHE PATENTSCHRIFT

(11) **EP 2 705 909 B1**
(45) Veröffentlichungstag und Bekanntmachung des Hinweises auf die Patenterteilung: **08.08.2018**
(21) Anmeldenummer: 13183035.8
(22) Anmeldetag: 04.09.2013
(51) Int. Cl.: B09B 3/00

(54) **VERFAHREN ZUM ABBAU DES ORGANISCHEN REAKTIONSPOTENZIALS DURCH KONTROLLIERTE ABSAUGUNG VON DEPONIEGAS**
Method for the degradation of the organic reaction potential by controlled extraction of landfill gas
Procédé de dégradation du potentiel de réaction organique par aspiration contrôlée de gaz de décharge

(30) Priorität: 05.09.2012 DE 102012108252
(43) Veröffentlichungstag der Anmeldung: 12.03.2014
(73) Patentinhaber: Lehner, Joachim, 71083 Herrenberg (DE)
(72) Erfinder: Lehner, Joachim, 71083 Herrenberg (DE)
(74) Vertreter: Fischer, Ernst

(56) Entgegenhaltungen:
- WO-A2-2006/010164
- DE-U1-202004 013 278
- US-A1- 2003 108 394
- US-A1- 2004 175 819
- US-A1- 2005 201 831
- US-A1- 2006 222 464
- US-A1- 2008 127 726
- US-A1- 2008 203 000

## Beschreibung

Die Erfindung betrifft ein Verfahren zum nachhaltigen und effizienten Abbau des organischen Reaktionspotenzials in Siedlungsabfalldeponien, ehemaligen Mülldeponien und Altablagerungen.

Bis Mitte 2005 war in Deutschland die Ablagerung unvorbehandelter Siedlungsabfälle mit organischen Inhaltsstoffen zugelassen. Aus den organischen Müllbestandteilen wird durch mikrobielle Umsetzung - auch noch Jahrzehnte nach Beendigung der Ablagerung - Deponiegas in erheblichem Umfang gebildet. Das Deponiegas muss daher bis zur Entlassung auf der Nachsorge kontrolliert gefasst, abgesaugt und behandelt werden. Bei den Siedlungsabfalldeponien, in denen infolge des verdichteten Einbaus anaeroben Milieubedingungen vorherrschen, wird Deponiegas mit den Hauptbestandteilen Methan (ca. 60 - 70 Vol.-%) und Kohlendioxid (ca. 30 - 40 Vol.-%) produziert. Zusätzlich enthält Deponiegas eine Vielzahl von Schadstoffen wie Schwefelwasserstoff, Mercaptane, Halogene und aromatische Kohlenwasserstoffe.

Die Deponiegasproduktion nimmt im Laufe der Jahre kontinuierlich ab. Die Zeitdauer der Abbauprozesse wird auf ca. 30 - 50 Jahre geschätzt; zugrunde gelegt wird eine Abbaureaktion erster Ordnung mit Halbwertszeiten zwischen < 3 und > 10 Jahren, je nach Abfallart (leicht, mittel bzw. schwer abbaubare organische Bestandteile). Hierbei werden mehrere Phasen der Gasproduktion durchlaufen. Die Zusammensetzung und der Feuchtigkeitsgehalt der Abfälle haben zudem Einfluss auf die Zusammensetzung des produzierten Deponiegases. Verbunden mit dem Rückgang der Gasproduktion ist die Zunahme instabiler anaerober Abbauprozesse. Deponiegas entweicht unkontrolliert in die Atmosphäre, falls keine entsprechenden technischen Maßnahmen ergriffen werden.

Die Umweltbeeinträchtigungen aufgrund der Gasemissionen sind erheblich:
- Deponiegas unterstützt den Treibhauseffekt in der Atmosphäre und schädigt damit das Klima. Methan (CH₄) als Hauptbestandteil des Deponiegasgemisches wird eine 25mal klimaschädlichere Wirkung im Vergleich zu Kohlendioxid (CO₂) zugesprochen.
- Chlor- und Fluorkohlenwasserstoffe, obwohl nur in Spuren vorhanden, sind maßgeblich an der Zerstörung der Ozonschicht beteiligt.
- Geruchsintensive Spurenstoffe im Deponiegas können zu Belästigungen und Beeinträchtigungen der Lebensqualität im Umfeld der Deponien führen.
- Auf Deponien besteht infolge der Gasemissionen Explosions- und Brandgefahr.
- Weitere potentielle Gefährdungen des Deponiepersonals sind durch toxische Gasbestandteile wie Schwefelwasserstoff vorhanden.

Die Notwendigkeit einer effektiven und kontrollierten Fassung und Behandlung der Deponiegase steht daher außer Frage. Deponieentgasungseinrichtungen zur Fassung, Behandlung und Verwertung sind bei geordneten Siedlungsabfalldeponien seit Anfang der neunziger Jahre Stand der Technik. Das gefasste Deponiegas wird in der Regel einer thermischen Verwertung zugeführt. Ist eine energetische Verwertung wegen rückläufiger Gasmengen wirtschaftlich nicht mehr darstellbar, muss das anfallende Deponiegas auch weiterhin gefasst, in der Regel thermisch und am Ende biologisch behandelt werden. Die rückläufige Gasproduktion der Deponien bzw. einzelner Deponieabschnitte führt in der Praxis zu erheblichen betrieblichen Problemen. Die vorhandenen Fackelanlagen sind nach Beendigung der Gasverwertung infolge der Auslegung als Ausfallanlagen zur Verwertung erfahrungsgemäß komplett überdimensioniert. Diese Anlagen werden übergangsweise häufig im Intervallbetrieb mit längeren Betriebsunterbrechungen gefahren bzw. die Absaugmengen in Richtung geringerer Absaugmengen angepasst. Eine Verminderung der Absaugmengen führt hierbei zu einer sich selbst verstärkenden Abwärtsspirale und ist unter Umweltgesichtspunkten kritisch zu sehen.

Mit Rücknahme der Absaugmengen nimmt auch der Einzugsbereich bzw. Erfassungsgrad der jeweiligen Gasfassungselemente ab. Die erfassbaren Gasmengen gehen ohne Freigabe der zweiten Stellgröße CH₄-Konzentration zurück, was wiederum eine Mengenanpassung bei unflexiblen technischen Vorgaben bezüglich der CH₄-Konzentration nach sich zieht. Unterm Strich führt diese Betriebsweise der Entgasungseinrichtungen zu einer immer uneffektiveren Gaserfassung. Nicht nur die Gasproduktion des Abfallkörpers an sich, sondern auch der Gaserfassungsgrad und somit der Wirkungsgrad der gesamten Entgasungseinrichtung nehmen ab. Probleme ergeben sich zudem aufgrund der sicherheitstechnischen Vorgaben hinsichtlich der Einhaltung der Abschaltgrenzwerte zur Vermeidung möglicher Explosionsgefahren durch das Ansaugen und Fördern explosionsfähiger Gasgemische. Die Grenzwerte nach der GUV - R 127 ("GUV-Regel Deponien" - Regeln für Sicherheit und Gesundheitsschutz) liegen hierbei für Methan (CH₄) bei ≤ 25 Vol.-% und Sauerstoff (O₂) bei ≥ 6 Vol.-%. Die sicherheitstechnische Forderung einer redundanten Überwachung der Gaszusammensetzung wurde standardmäßig durch Überwachung und Einbindung beider Parameter in die Not-Aus-Kette gelöst. Erst in jüngster Zeit gehen einzelne Anlagenhersteller dazu über, nur noch die Sauerstoffkonzentration - dafür mit zwei getrennten Analyseeinheiten - zu überwachen.

### Erwähnung des Standes der Technik:

US 2008/0127726 A1 beschreibt es, bei einer Deponie die Extraktionsrate von Deponiegas zu erhöhen, wenn in dem Deponiegas die Methankonzentration relativ hoch und Stickstoff relativ niedrig ist. Zudem ist es beschrieben, die Extraktionsrate zu erniedrigen, wenn das molekulare Verhältnis von Kohlendioxid zu Methan hoch ist. DE 20 2004 013 278 U1 beschreibt, dass die Abbauprozesse im Deponiekörper durch die Steigerung der Absaugung mehr oder weniger gezielt beeinflusst werden. Durch die aktive Versorgung des Deponiekörpers mit Luftsauerstoff wird ein Wechsel der Milieubedingungen und damit einer Verschiebung des Verhältnisses zwischen anaeroben und aeroben Abbauprozessen erzielt. Die Aerobisierung führt zu einer verstärkten Kohlendioxidproduktion und einer Veränderung des Methan/Kohlendioxid Verhältnisses. US 2004/0175819 A1 offenbart es, dass die aus dem Bereich des Deponiebodens angesaugte Gasmenge größer ist als die in diesem Bereich aus der Zersetzung entstehende Gasmenge, so dass Sauerstoff in der atmosphärischen Luft von außen in die Deponie eindringt und den Zersetzungsprozess in eine Zersetzung überführt, die zumindest größtenteils eine aerobe Zersetzung ist. US 2005/0201831 A1 beschreibt es, dass, wenn das in der Deponie erzeugte Deponiegas keine wirtschaftliche Effizienz aufweist, es möglich ist, die Deponie frühzeitig zu stabilisieren, indem die gesamte Deponie im aeroben Abbauzustand gehalten wird. Dabei wird unter Druck stehende Luft in die Deponie eingeleitet.

Aufgabe der Erfindung ist es, ausgehend von dieser unbefriedigenden Ausgangssituation, ein Verfahren für eine kontrollierte Entgasung zu entwickeln, wobei die Emissionen von Treibhausgasen minimiert und über einen kurzen Zeitraum erfolgen.

Das erfindungsgemäße Verfahren gemäß Anspruch 1 zur kontrollierten Absaugung von Deponiegas einer Abfalldeponie mit organischen Abfällen weist den Schritt auf: kontinuierliches Absaugen von Deponiegas mit Hilfe eines Gasfassungssystems derart, dass das organische Reaktionspotenzial in der Abfalldeponie vorwiegend aerob abgebaut wird, der hierzu erforderliche Luftsauerstoffeintrag, die Sauerstoffversorgung und Sauerstoffverteilung ausschließlich im Unterdruckbereich erfolgt und somit eine Verschiebung des CH₄-/CO₂-Gleichgewichts im Deponiekörper der Abfalldeponie in Richtung CO₂ erfolgen kann, ohne dass hierbei Luft im Überdruckbereich in den Deponiekörper eingebracht wird; wobei der für die Verschiebung der Abbaubedingungen erforderliche Sauerstoff durch das Ansaugen von Umgebungsluft in den Deponiekörper bereitgestellt wird, somit eine Sauerstoffversorgung durch die Absaugung der Gasfassungselemente selbst erfolgt und die Lufteintragsstellen der Abfalldeponie jegliche gaswegige Verbindungen zur Atmosphäre sind.

Als Kernaussagen konnte auf der Grundlage eines mehr als 5-jährigen Betriebes der Entgasungsanlage der Deponie Horb-Rexingen in Deutschland nachgewiesen werden, dass sich die Absaugverhältnisse im Deponiekörper - bei Absenkung des CH₄ - Gehaltes keineswegs destabilisieren. Das Verhältnis der CO₂- und CH₄-Konzentrationen im Absaugvolumenstrom blieb im Wesentlichen konstant. Auch bei niedrigen CH₄-Gehalten < 10 bzw. < 15 Vol.-% konnten stabile Absaugverhältnisse mit konstanten Absaugmengen und dies sogar nach Abschluss der Deponie mit einer qualifizierten Oberflächenabdichtung nachgewiesen werden. Dabei wurde infolge der kontrollierten, kontinuierlichen und zielgerichteten Absaugung mit konstant hoher Absaugmenge eine dauerhafte und signifikante Verschiebung des CH₄-/CO₂-Verhältnisses in Richtung CO₂ nachgewiesen. Zudem erhöht sich der Erfassungsgrad des Gasfassungssystems durch die hohe Absaugmenge.

Indem in dem erfindungsgemäßen Verfahren die Außenluft in den Deponiekörper gesaugt wird, findet eine Bevorzugung der aeroben Abbauprozesse gegenüber den anaeroben Abbauprozessen statt. Die aeroben Abbauprozesse führen zu einer Bildung von Kohlendioxid, wohingegen die anaeroben Abbauprozesse zu einer Bildung von Methan führen. Weil Kohlendioxid weniger klimaschädlich als Methan ist, führt die Bevorzugung der aeroben Abbauprozesse zu einer geringeren klimaschädlichen Bilanz der Deponie. Zudem sind die aeroben Abbauprozesse schneller als die anaeroben, so dass die bakteriell zersetzbaren Abfälle schneller abgebaut werden, wodurch die Nachsorgephase der Deponie vorteilhaft kurz ist.

Die Lufteintragsstellen der Abfalldeponie sind bevorzugt das gesamte Entwässerungssystem an der Deponiebasis, die Gasverteilschicht einer Oberflächenabdichtung mit Konvektionssperre, eine gasdurchlässige Oberflächenabdichtung/ -abdeckung ohne Konvektionssperre und sonstige Durchdringungsstellen der Basis- bzw. Oberflächenabdeckung/ - abdichtung wie Kabelzugschächte, Kabelleerrohre, Abwasserschächte und/oder Abwasserleitungen.

Es ist vorteilhaft nicht erforderlich, einzelne Gasbrunnen und/oder Gaslanzen des Gasfassungssystems für den Eintrag von Luft in den Deponiekörper zu öffnen. Es ist zudem vorteilhaft, dass ein auf Siedlungsabfalldeponien bereits vorhandenes konventionelles Gasfassungssystem zur Gasabsaugung vollständig und effektiv genutzt und weiterbetrieben werden kann. Eine Nachrüstung der Deponie mit zusätzlichen technischen Einrichtungen zum Eintrag von Luft bzw. zur Absaugung tieferer Abfallschichten ist nicht erforderlich. Es ist zudem vorteilhaft dass Lufteintragsstellen nicht gesondert und explizit herstellt werden müssen. Es werden vielmehr die vorhandenen Gaswegigkeiten eines Deponiekörpers, welche bei Nichtabsaugung auch die bevorzugten Gasaustrittsstellen darstellen, genutzt, um den erforderlichen Luftsauerstoff in den Abfallkörper einzusaugen und für die Umstellung der Abbauprozesse zur Verfügung zu stellen. Die Außenluft wird zielgerichtet an den Stellen eingesaugt, an denen eine erhöhte biologische Aktivität anzutreffen ist.

Über welche Eintragsstellen der für die Aerobisierung erforderliche Luftsauerstoff eingesaugt wird, ist abhängig von den spezifischen Randbedingungen des jeweiligen Deponiekörpers und/oder der einzelnen Deponieabschnitte sowie des konstruktiven Aufbaus und der Leistungsfähigkeit des vorhandenen Gasfassungssystems. Die Luftversorgung wird an die jeweilige Ausgangssituation individuell angepasst.

Die Luftverteilung im Deponiekörper erfolgt hierbei zielgerichtet in der Art, dass ein bereits vorhandenes Gasfassungssystem vollständig genutzt und unter neuen Zielvorgaben optimal eingeregelt wird. Optimal bedeutet in dem Zusammenhang, dass Gasfassungselemente mit hohen Methankonzentrationen verstärkt abgesaugt werden.

Es ist bevorzugt, dass das Gasfassungssystem mit einem derart konstant hohen Absaugvolumenstrom kontinuierlich abgesaugt wird, dass ein Verhältnis V(CH₄)/V(CO₂) zwischen 0,1 und 1 erzielt wird und der Deponiekörper im Unterdruckbereich gehalten wird, wobei V(CO₂) und V(CH₄) jeweils die Volumenanteile von Kohlendioxid und Methan in dem Absaugvolumenstrom sind.

Das Verhältnis von Methan zu Kohlendioxid kann über die Menge der in die Deponie gesaugten Außenluft gesteuert werden, wobei eine Erhöhung der Menge an Außenluft zu einem kleineren Verhältnis V(CH₄)/V(CO₂) führt. Prinzipiell könnte die Menge an Außenluft derart erhöht werden, dass die Methankonzentrationen auf nahezu Null reduziert werden. Dies ist aus technischen und wirtschaftlichen Gründen jedoch nicht sinnvoll (insbesondere größere Anlagenauslegung, höhere Energiekosten, Zunahme des nicht genutzten Sauerstoffgehalts im Absaugstrom). V(CH₄)/V(CO₂)-Verhältnisse von 0,1 bis 1 stellen einen optimalen Kompromiss dar.

Bevorzugtermaßen wird das Gasfassungssystem mit einem derart konstant hohen Absaugvolumenstrom kontinuierlich abgesaugt, dass der Volumenanteil V(O₂) von Sauerstoff in dem Absaugvolumenstrom zwischen 0,1% und 5%, insbesondere zwischen 0,1% und 3%, liegt. Die Aerobisierung ist umso effizienter, je vollständiger der über die Außenluft eingesaugte Sauerstoff tatsächlich auch umgesetzt wird. Dabei wird der Volumenanteil V(O₂) bevorzugt mittels eines paramagnetischen bzw. elektrochemischen Messprinzips gemessen. Die Volumenanteile V(CH₄) und V(CO₂) werden bevorzugt mittels Infrarotabsorption gemessen.
Es ist bevorzugt, dass das Gasfassungssystem mit einem derart konstant hohen Absaugvolumenstrom kontinuierlich abgesaugt wird, dass sich im Deponiekörper ein Unterdruck von weniger als -100 mbar, insbesondere von -0,1 mbar bis -10 mbar, im Bezug zum Atmosphärendruck einstellt.
Bevorzugt ist es, dass die Abfalldeponie ein qualifiziertes Oberflächenabdichtungssystem nach dem Stand der Technik gemäß der Deponieverordnung (Deponieverordnung vom 27. April 2009 (BGBl. I S. 900), die zuletzt durch Artikel 5 Absatz 28 des Gesetzes vom 24. Februar 2012 (BGBl. I S. 212) geändert worden ist; vorher: Technische Anleitung Abfall), aufweist.

Es ist vorgesehen, dass das Gasfassungssystem eine Mehrzahl insbesondere bereits vorhandener Gasfassungselemente aufweist und das Verfahren mit lediglich einem Teil der Gasfassungselemente durchgeführt wird, wobei das mit dem anderen Teil der Gasfassungselemente abgesaugte Deponiegas auch weiterhin einer Gasverwertung zugeführt werden kann (Gut-/Schwachgastrennung und/oder Auftrennung der Deponieabschnitte).
Es ist bevorzugt, dass das Gasfassungssystem eine Mehrzahl an Gasfassungselementen aufweist und das Verfahren mit lediglich einem Teil der Gasfassungselemente durchgeführt wird, wobei aus dem anderen Teil der Gasfassungselemente ein Deponiegas als Stützgas mit einem derartigen Absaugvolumenstrom abgesaugt wird, dass das Stützgas einen Volumenanteil von Methan V_{SG}(CH₄) von mindestens 20%, insbesondere mindestens 30%, hat.
Die Gasfassungselemente sind insbesondere konventionelle, bereits vorhandene Gasfassungseinrichtungen wie Gasbrunnen, Gasdrainagen und/oder Gaslanzen.

Bevorzugt kann das Verfahren auch in der Form zur Anwendung gebracht werden, dass die Mehrzahl der Gasfassungselemente in Konzentrationsbereichen für Methan von weniger als 10 bis 15 Vol.-% kontinuierlich abgesaugt werden und nur einige wenige ausgewählte Gasfassungselemente mit einem solchen Absaugvolumenstrom eingestellt werden, dass der Volumenanteil von Methan V(CH₄) mindestens 20%, insbesondere mindestens 30%, hat. Der aus beiden Teilen gemischte Gesamtgasstrom hat wiederum bevorzugt einen Volumenanteil von Methan V_{ges}(CH₄) von maximal 10%, insbesondere maximal 5%. Mit einer solchen Einstellung des Gasfassungssystems kann eine autotherme thermische Behandlung des abgesaugten Deponiegases nach wie vor aufrecht gehalten werden.

Es ist vorgesehen dass die Abfalldeponie an der Deponiebasis ein Entwässerungssystem mit einer Entwässerungsschicht und einem Drainagesystem aufweist, so dass der Abfallkörper an der Deponiebasis mit Außenluft kontaktierbar ist und das Gasfassungssystem eine Mehrzahl an der Oberseite der Abfalldeponie in den Deponiekörper mündende Gasfassungselemente aufweist, so dass beim Absaugen der Deponiekörper vertikal und horizontal durchströmt wird.
Da das Entwässerungssystem die gesamte Deponiebasis erschließt, wird Außenluft vorteilhaft in den Deponiekörper auch über den gesamten Bodenbereich eingetragen. Dadurch kann der Deponiekörper mit Hilfe vorhandener Gasfassungselemente vollständig mit Außenluft vor allem von unten nach oben durchströmt und aerobisiert werden.
Es ist bevorzugt, dass die Abfalldeponie im Bereich der Oberflächenabdichtung zudem eine Gasverteilschicht aufweist, so dass beim Absaugen der Gasfassungselemente zusätzlich Außenluft vertikal auch von oben nach unten - von der Drainschicht über den Abfallkörper bis zu den Gasfassungselementen - durchströmt wird.
Durch das erfindungsgemäße Verfahren ergeben sich folgende Vorteile:
a) es wird ein definierter Druckgradient von der Atmosphäre in Richtung Deponiekörper aufgebaut und sichergestellt, der Gaserfassungsgrad wird wesentlich gesteigert, die Strömungsverhältnisse werden durch die "aktive" Gasabsaugung vorgegeben,
b) der über die Gasphase ausgetragene abbaubare Kohlenstoff C_{org}, ausgedrückt als Summe aus Methankohlenstoff und Kohlendioxidkohlenstoff, wird gesteigert,
c) das unkontrollierte Entweichen von Deponiegas wird minimiert bzw. weitgehend unterbunden,
d) unkontrollierte Gasemissionen werden während des gesamten Stabilisierungsprozess des Deponiekörpers reduziert,
e) die Explosionsgefahren auf der Deponie werden auf ein Minimum reduziert,
f) die Konzentration und Gesundheitsgefährdung durch Schwefelwasserstoff werden wesentlich reduziert.

Stabile Absaugbedingungen werden bei dieser Betriebsweise der Gasabsaugung mit einem bedarfsgesteuerten Luftsauerstoffeintrag bei CH₄-Konzentrationen < 15 Vol.-% und O₂-Konzentrationen < 3 Vol.-% bzw. bei CH₄-Konzentrationen < 10 Vol.-% und O₂-Konzentrationen < 5 Vol.-% erzielt.

Eine kontinuierliche und stabile Gasabsaugung erfolgt bei CH₄-Konzentrationen < 25 Vol.-% in bislang weitgehend unbekannten Konzentrationsbereichen. Ein in der Fachliteratur als "Übersaugung" bezeichneter Zusammenbruch der Gasproduktion bei CH₄-Konzentrationen < 40 Vol.-% findet nicht statt. Es findet vielmehr ein Wechsel der Abbauverhältnisse statt. Bei einer Gesamt-Kohlenstoff-Bilanzierung nimmt die Gasproduktion bzw. der Gaserfassungsgrad - bezogen auf Summe C_{org} - zu.

Mit einer verstärkten, kontrollierten Absaugung und der damit verbundenen Absenkung des CH₄-Gehalts wird in Konzentrationsbereiche vorgedrungen, die bei alleiniger Betrachtung der CH₄-Konzentration je nach Gasfassungselement bzw. Teilabschnitten in den Explosionsgrenzen von Methan in Luft liegen. Methan bildet mit Luftsauerstoff ein zündfähiges Gasgemisch in den Konzentrationsbereichen von 5 bis 15 Vol.-% Methan in Luft (Untere Explosionsgrenze UEG von Methan in Luft: 5 Vol.-%, Obere Explosionsgrenze OEG von Methan in Luft: 15 Vol.-%). Die Bildung eines explosionsfähigen Gasgemisches setzt jedoch zwingend das gleichzeitige Vorhandensein einer ausreichenden Sauerstoffkonzentration von > 12 Vol.-% voraus.

Dieser Sauerstoff-Grenzwert wird bei der Absenkung des CH₄-Gehaltes bei Weitem nicht erreicht. Die Sauerstoffkonzentration im Hauptgasstrom bleibt bei kontrollierter Absaugung unter 6 Vol.-%. Eine Explosionsgefahr ist somit ausgeschlossen.

Das Verfahren ist insbesondere anwendbar auf:
a) Siedlungsabfalldeponien in der Stilllegungs- und Nachsorgephase gemäß DepV nach Beendigung der Ablagerung organischer Abfälle 2005,
b) ehemalige Mülldeponien und Altablagerungen,
c) auf Deponien mit qualifizierter Oberflächenabdichtung DK II oder gleichwertig,
d) bei Gut-/Schwachgassystemen bereits in der Betriebs-/ Stilllegungsphase der Deponie - parallel zur Gasverwertung - in älteren Abschnitten und/oder gasgefährdeten Bereichen,
e) auf einzelne Deponieabschnitte.

Vorteile des Verfahrens und Betriebserfahrungen:
a) positive Beeinflussung des Gas- und Wasserhaushaltes,
b) Absenkung des CH₄-Gehaltes,
c) effektive Steuerung des CH₄-/CO₂-Verhältnisses
d) Verschiebung des CH₄-/CO₂-Verhältnisses im Gaspfad in Richtung CO₂.
   Auswirkungen:
   - Reduktion der Treibhausgasemissionen,
   - Minimierung der Explosionsgefahr,
   - dauerhafte Absenkung der H₂S-Konzentrationen,
e) kontrollierter, sicherer Anlagenbetrieb mit einer hohen Anlagenverfügbarkeit,
f) stabile Absaugverhältnisse - quasi-stationärer Absaugzustand mit konstant hoher Absaugmenge,
g) Unterdruckbedingungen, je nach technischer Ausführung und Funktionsfähigkeit des Gasfassungssystem im gesamten Deponiekörper,
h) Verschiebung der NH₄-N/NO₃-N-Gleichgewichtes im Sickerwasser in Richtung Nitrat-Stickstoff,
i) bedarfsgesteuerter O₂-Eintrag im niedrigen Unterdruckbereich mit effektiver Umsetzung des Sauerstoffeintrags,
j) schonende und kontrollierte Stabilisierung des Deponiekörpers,
k) ein Gesamt-Kohlenstoff-Austrag, der über den Werten der Gasprognose nach IPCC FOD-Methode liegt,
l) kein relevanter Temperaturanstieg,
m) keine negativen Einflüsse durch die Oberflächenabdichtung,
n) keine negativen Einflüsse durch die Umstellung der Absaugung,
o) kein aufwendiges Mess- und Überwachungsprogramm erforderlich,
p) niedrige Betriebkosten.

Im Folgenden wird anhand der beigefügten schematischen Zeichnungen die Erfindung näher erläutert. Es zeigen:
Figur 1 eine Querschnittsansicht durch einen erfindungsgemäß behandelten Deponiekörper,
Figur 2 ein Diagramm über die zeitliche Entwicklung der Gasproduktion einer Deponie auf Grundlage einer theoretischen Gasprognose und
Figur 3 die zeitliche Entwicklung des tatsächlich erfassten organischen Kohlenstoffs über den Gaspfad anhand von Messungen (Bilanzierung jeweils als Gesamt-C, CH₄-C und CO₂-C in t/a).

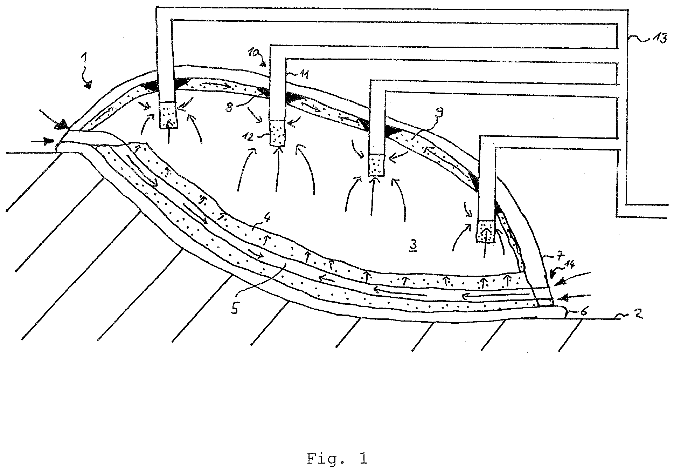

Wie es aus Figur 1 ersichtlich ist, ist eine Deponie 1 auf einem als dafür geeignet ausgewählten Standort angeordnet. Das Deponieplanum 2 weist, ggf. nach Ausführung erforderlicher technischer Verbesserungen der geologischen Barriere und der Profilierung, ein definiertes freies Gefälle auf. Unmittelbar auf dem Deponieplanum 2 ist eine Deponiebasisabdichtung 6 angeordnet. Die Deponie 1 weist weiterhin nach Abschluss der Auffüllung eine Deponieoberflächenabdichtung 7 auf.

Innerhalb der beiden Abdichtungssysteme 6 und 7 befindet sich der eigentliche Deponiekörper 3, der zumindest teilweise organisch abbaubare Abfälle enthält. Die Deponieabdichtungssysteme 6 und 7 sind bevorzugt wie in der Deponieverordnung beschrieben ausgeführt. Die Deponie 1 weist eine qualifizierte Oberflächenabdichtung auf, die unterhalb der Dichtung eine Gasverteilschicht 9 aus Kies oder gleichwertigen Ersatzbaustoffen aufweist. Die qualifizierte Oberflächenabdichtung weist weiterhin zwischen der oberen Deponieabdichtungshülle 7 und der Gasverteilschicht 9 eine mineralische Dichtung auf. Gaskollektoren (Gasbrunnen, Gasdrainagen, etc.) 10 sind an den Durchdringungsstellen der Oberflächenabdichtung und im oberen Teil als ungelochte Vollrohre 11 mit mineralischem Lehmkegel 8 und je nach Anforderung mit Rollringdichtungen ausgeführt. Dadurch werden Kurzschlussströmungen unterbunden. In Figur 1 ist der Kegelstumpf nur im Bereich der Gasverteilschicht 9 dargestellt.

Die Deponie 1 weist ein Entwässerungssystem auf, mittels dem Sickerwasser gefasst und kontrolliert aus dem Deponiekörper 3 abgeleitet werden kann. Das Entwässerungssystem weist Drainagerohre 5 und einen Flächenfilter (Kiesschicht) 4 auf. Der Flächenfilter 4 ist unmittelbar auf der Basisabdichtung 6 aufgebracht. Ein Sickerwassersammelsystem ist in der Kiesschicht 4 angeordnet und über Endschächte außerhalb des Deponiekörpers für regelmäßige Reinigungs- (Hochdruckspülung) und Inspektionsarbeiten (Kamerabefahrung) zugänglich. Das Entwässerungssystem mit dem Flächenfilter und dem Leitungssystem ist nicht vollständig technisch gasdicht ausgeführt. Mittels Entgasungseinrichtungen ist Gas aus dem Deponiekörper 3 absaugbar. Ein Gasfassungssystem weist mindestens einen einzigen Gaskollektor 10 auf, der im Deponiekörper ein gelochtes bzw. geschlitztes Rohr und eine Kiesumhüllung 12 aufweist.

In Figur 1 sind beispielhaft vier Gasbrunnen 10 skizziert. Die Gasbrunnen 10 sind via ein Gassammelleitungssystem 13 miteinander verbunden. Die vier Gaskollektoren sind beispielhaft über Einzelleitungen angeschlossen und mit einem einen Gassammelbalken verbunden. Am Gassammelbalken können die einzelnen Gaskollektoren gemessen und eingeregelt werden. Der Gassammelbalken ist beispielhaft über eine Gasleitung mit einer Gasförderstation verbunden.

In der Gasförderstation sind beispielhaft die technischen Einrichtungen für eine kontrollierte Absaugung wie ein Hauptgassammelbalken, ein Verdichter, Deflagrationssicherungen, Schnellschlussklappen, eine Druck- und Temperaturüberwachung, eine Gasanalyseeinrichtung, etc. installiert. In Figur 1 sind die sich bei dem erfindungsgemäß durchgeführten Verfahren in der Deponie 1 einstellenden Strömungen skizziert. Außenluft wird insbesondere via den Flächenfilter 4 und dem Sickerwasserleitungssystem im Bereich der Deponiebasis und der Gasverteilschicht 9 unter der Oberflächenabdichtung 7 bei Anlegung eines Unterdrucks an den Gaskollektoren 10 eingesaugt.

Aufgrund der Gaswegigkeit der beiden Drainschichten wird die flächige Luftverteilung gewährleistet. Im unteren Bereich wird ausgehend vom Flächenfilter 4 der Deponiekörper 3 hauptsächlich vertikal von unten nach oben in Richtung der Gaskollektoren 10 durchströmt. Im oberen Bereich kann Außenluft in die Gasverteilschicht 9 eintreten. Und der Deponiekörper 3 wird zusätzlich in den oberen Schichten mit Luftsauerstoff versorgt. Die Durchströmung erfolgt hier hauptsächlich vertikal von oben nach unten in Richtung der Gaskollektoren 10.

Die tatsächliche Ausgestaltung der Flieswege im Deponiekörper ist von vielen Faktoren wie Deponieaufbau, Verfüllgeschwindigkeit, Abfallzusammensetzung, Veränderung des Materials infolge der Abbauprozesse und des Wasserhaushaltes, etc. abhängig und damit größtenteils vorgegeben und nach Deponieabschluss nicht mehr wesentlich beeinflussbar.

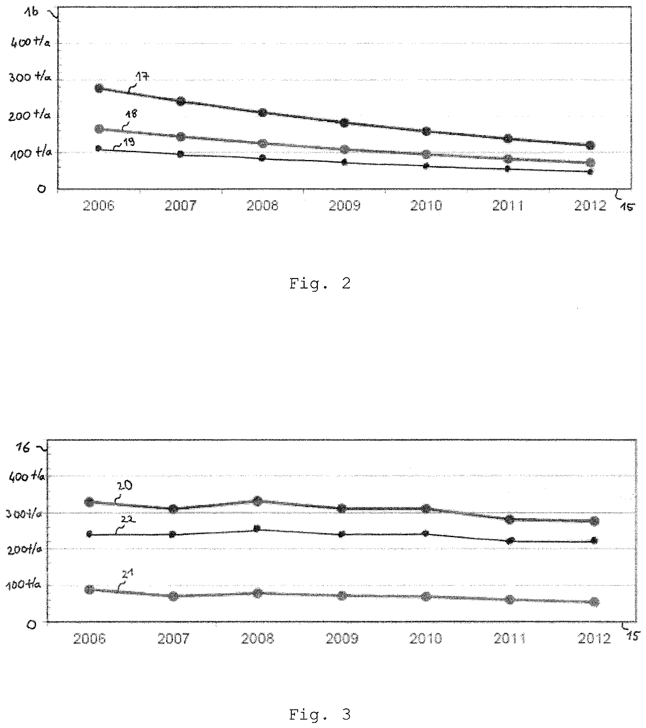

Figur 2 zeigt die zeitliche Entwicklung der Gasproduktion (Bilanzierung als Gesamt-C, CH₄-C und CO₂-C in t/a) auf Grundlage der Prognoseansätze nach der FOD-Methode der IPCC und Figur 3 zeigt die zeitliche Entwicklung des tatsächlich erfassten organischen Kohlenstoffs über den Gaspfad anhand von Messungen (Bilanzierung als Gesamt-C, CH₄-C und CO₂-C in t/a) einer Test-Deponie.

Aufgetragen ist jeweils über der Abszisse 15 die Zeit in einem Zeitraum vom Jahr 2006 bis in das Jahr 2012 und über der Ordinate 16 der Kohlenstoffaustrag in Tonnen pro Jahr. Der Zeitraum liegt nach Beendigung der Ablagerung der Abfälle (Verfüllende: Anfang 2000). In den Diagrammen sind die zeitlichen Verläufe von CH₄-C 18, 21 und CO₂-C 19, 22 in t/a dargestellt, wobei Methankohlenstoff und Kohlendioxidkohlenstoff die Anteile der Kohlenstoffemissionen bezeichnen, in der der Kohlenstoff gebunden in Methan beziehungsweise gebunden in Kohlendioxid über den Gaspfad auf dem Deponiekörper ausgetragen wird. Ebenfalls dargestellt ist der Gesamtkohlenstoff Gesamt-C 17, 20, der die Summe von Methankohlenstoff 18, 21 und Kohlendioxidkohlenstoff 19, 22 bezeichnet.

In Figur 2 ist der C-Austrag auf Grundlage der Gasprognose nach der IPCC FOD-Methode dargestellt. Für die Prognose wurde eine Gaszusammensetzung von 60 Vol.-% Methan und 40% Kohlendioxid und eine Halbwertszeit von 5 Jahren zugrunde gelegt. Figur 3 zeigt die mittels Messungen, Auswertung der Betriebsaufzeichnungen und Mengenbilanzierung ermittelten tatsächlichen Kohlenstoffemissionen. Die Deponie wurde in dem Zeitraum erfindungsgemäß und mit einem konstanten Absaugvolumenstrom von 3*10² Nm³/h betrieben. Nm³ bezeichnet dabei das abgesaugte Volumen bei einem Druck von 1 atm und einer Temperatur von 273,15 K. Durch die Absaugung wurde im Deponiekörper ein Unterdruck von weniger als -20 mbar, insbesondere -0,1 mbar bis maximal -20 mbar, angelegt.

Im Gegensatz zur Prognose der Gasproduktion ohne Absaugung 18, 19 ist der tatsächliche Austrag an Methankohlenstoff 21 bei der kontrollierten Absaugung wesentlich kleiner als der von Kohlendioxidkohlenstoff 22. Im Jahr 2012 wurde ein Verhältnis V(CH₄)/V(CO₂) = 0,29 erzielt. Zudem ist der tatsächliche Austrag an Gesamtkohlenstoff 20 über den gesamten Zeitraum größer als der Gesamtkohlenstoff 17 der Prognose. Weiterhin ist aus Figuren 2 und 3 ersichtlich, dass der Gesamtkohlenstoff 20 weniger stark in dem Zeitraum als in der Prognose abfällt.

### Bezugszeichenliste

- 1: Deponie
- 2: Deponieplanum
- 3: Deponiekörper
- 4: Flächenfilter (Kiesschicht)
- 5: Drainagerohre
- 6: Basisabdichtung
- 7: Oberflächenabdichtung
- 8: Lehmkegel
- 9: Gasverteilschicht
- 10: Gasbrunnen - Gaskollektor
- 11: Vollrohr
- 12: Kiesumhüllung
- 13: Gassammelsystem
- 15: Abszisse
- 16: Ordinate
- 17: Gesamtkohlenstoff laut Prognose
- 18: Methankohlenstoff laut Prognose
- 19: Kohlendioxidkohlenstoff laut Prognose
- 20: Gesamtkohlenstoff gemäß Bilanzierung
- 21: Methankohlenstoff gemäß Bilanzierung
- 22: Kohlendioxidkohlenstoff gemäß Bilanzierung

## Patentansprüche

1. Verfahren zur kontrollierten Absaugung von Deponiegas einer Abfalldeponie (1) mit organischen Abfällen, mit dem Schritt:
kontinuierliche, kontrollierte und zielgerichtete Absaugung von Deponiegas mit Hilfe eines Gasfassungssystems der Abfalldeponie derart, dass das organische Reaktionspotenzial in der Abfalldeponie vorwiegend aerob abgebaut wird, der hierzu erforderliche Luftsauerstoffeintrag, die Sauerstoffversorgung und die Sauerstoffverteilung ausschließlich im Unterdruckbereich erfolgt und somit eine Verschiebung des CH₄-/CO₂-Gleichgewichts im Deponiekörper (3) der Abfalldeponie in Richtung CO₂ erfolgen kann, ohne dass hierbei Luft im Überdruckbereich in den Deponiekörper (3) eingebracht wird;
wobei der für die Verschiebung der Abbaubedingungen erforderliche Sauerstoff durch das Ansaugen von Umgebungsluft in den Deponiekörper (3) bereitgestellt wird und somit eine Sauerstoffversorgung durch die Absaugung selbst erfolgt; wobei Lufteintragsstellen der Abfalldeponie jegliche gaswegige Verbindungen zur Atmosphäre sind, wobei das Gasfassungssystem eine Mehrzahl an Gasfassungselementen (10) aufweist, wobei die Gasfassungselemente (10) Gasbrunnen und/oder Gaslanzen sind, und das Verfahren mit lediglich einem Teil der Gasfassungselemente (10) durchgeführt wird, wobei das mit dem anderen Teil der Gasfassungselemente (10) abgesaugte Deponiegas einer Gasverwertung zugeführt wird und wobei die Abfalldeponie an der Deponiebasis ein Entwässerungssystem mit einem Flächenfilter (4) und Drainagerohren (5) aufweist, so dass das Drainagesystem und der Flächenfilter (4) der Abfalldeponie (1) mit Außenluft kontaktierbar ist und dadurch der Deponiekörper (3) mit Hilfe von Gasfassungselementen (10) vollständig mit Außenluft vor allem von unten nach oben durchströmt und aerobisiert wird.

2. Verfahren gemäß Anspruch 1, wobei die Lufteintragsstellen der Abfalldeponie das gesamte Entwässerungssystem an der Deponiebasis und/oder eine Gasverteilschicht (9) und/oder Leckagestellen einer Oberflächenabdeckung/-abdichtung (7) und/oder gaswegige Austrittsstellen und/oder -flächen und/oder Durchdringungsstellen des Deponiekörpers, insbesondere Kabelzugschächte, -leerrohre, Abwasserschächte und/oder - leitungen, sind.

3. Verfahren gemäß Anspruch 1 oder 2, wobei das Gasfassungssystem mit einem derart konstant hohen Absaugvolumenstrom kontinuierlich abgesaugt wird, dass ein Verhältnis V(CH₄)/V(CO₂) kleiner 1, insbesondere zwischen 0,1 und 1, erzielt und der Deponiekörper im Unterdruckbereich gehalten wird, wobei V(CO₂) und V(CH₄) jeweils die Volumenanteile von Kohlendioxid und Methan in dem Absaugvolumenstrom sind.

4. Verfahren gemäß einem der Ansprüche 1 bis 3, wobei das Gasfassungssystem mit einem derart konstant hohen Absaugvolumenstrom kontinuierlich abgesaugt wird, dass der Volumenanteil V(O₂) von Sauerstoff in dem Absaugvolumenstrom zwischen 0,1% und 5%, insbesondere zwischen 0,1% und 3%, liegt.

5. Verfahren gemäß einem der Ansprüche 1 bis 4, wobei das Gasfassungssystem mit einem derart konstant hohen Absaugvolumenstrom kontinuierlich abgesaugt wird, dass sich im Deponiekörper (3) ein Unterdruck von kleiner als 100 mbar, insbesondere von 0,1 mbar bis 100 mbar, niedriger als der Umgebungsdruck der Deponie (1), einstellt.

6. Verfahren gemäß einem der Ansprüche 1 bis 5, wobei die Abfalldeponie ein qualifiziertes Oberflächenabdichtungssystem gemäß einer Deponieverordnung aufweist.

7. Verfahren gemäß einem der Ansprüche 1 bis 6, wobei das Gasfassungssystem eine Mehrzahl an Gasfassungselementen (10) aufweist und das Verfahren mit lediglich einem Teil der Gasfassungselemente (10) durchgeführt wird, wobei aus dem anderen Teil der Gasfassungselemente (10) ein Deponiegas als Stützgas mit einem derartigen Absaugvolumenstrom abgesaugt wird, dass das Stützgas einen Volumenanteil von Methan V_{SG}(CH₄) von mindestens 20%, insbesondere mindestens 30%, hat.

8. Verfahren gemäß Anspruch 7, wobei das aus beiden Teilen gemischte Deponiegas einen Volumenanteil von Methan V_{ges}(CH₄) von maximal 10%, insbesondere maximal 5%, hat.

9. Verfahren gemäß einem der Ansprüche 1 bis 8, wobei die Abfalldeponie (1) im Bereich der Oberflächenabdichtung (7) eine Gasverteilschicht (9) aufweist, so dass beim Absaugen der Gasfassungselemente zusätzlich Außenluft vertikal von oben nach unten - von der Gasverteilschicht (9) über den Abfallkörper (3) bis zu den Gaskollektoren (10) - durchströmt wird.

## Claims

1. Method for controlled suction of landfill gas of a landfill (1) with organic waste, with the step: continuous, controlled and target-oriented extraction of landfill gas with help of a gas collection system of the landfill such that the organic reaction potential in the landfill is decomposed mainly aerobically, the hereto necessary input of atmospheric oxygen, the supply of oxygen and the distribution of oxygen take place exclusively in the range below atmospheric pressure and thus a shift of the CH₄/CO₂-equilibrium in the landfill body (3) of the landfill can take place towards CO₂ without that air in the overpressure range is hereby input into the landfill body (3); wherein the oxygen necessary for shifting the decomposition conditions is provided by the suctioning of ambient air into the landfill body (3) and thus an oxygen supply takes place by the suction itself; wherein air inlet positions of the landfill are any gaseous connections to the atmosphere, wherein the gas collection system comprises a plurality of gas collection elements (10), wherein the gas collection elements (10) are gas wells and/or gas lances, and the method is carried out with only a part of the gas collection elements (10), wherein the landfill gas sucked with the other part of the gas collection elements (10) is supplied to a gas utilisation and wherein the landfill comprises at the landfill base a drainage system with a surface filter (4) and drainage pipes (5) so that the drainage system and the surface filter (4) of the landfill (1) can be contacted with outside air and thereby the landfill body (3) is completely flown through by outside air predominantly from bottom to top with the aid of gas collection elements (10) and aerobised.

2. Method according to claim 1, wherein the air inlet positions of the landfill are the whole dewatering system at the landfill base and/or a gas distributing layer (9) and/or leakage positions of a surface cover/sealing (7) and/or gaseous exit positions and/or gaseous exit surfaces and/or penetration positions of the landfill body, in particular cable pulling shafts, cable empty conduits, wastewater shafts and/or wastewater pipes.

3. Method according to claim 1 or 2, wherein the gas collection system is continuously extracted with such a constant high suction volume flow that a rate V(CH₄)/V(CO₂) smaller than 1, in particular between 0,1 and 1, is achieved and the landfill body is kept in the range below atmospheric pressure, wherein V(CO₂) and V(CH₄) are the volume fractions of carbon dioxide and methane in the extraction volume flow, respectively.

4. Method according to any one of claims 1 to 3, wherein the gas collection system is continuously sucked with such a constant high suction volume flow that the volume fraction V(O₂) of oxygen in the extraction volume flow is between 0,1% and 5%, in particular between 0,1% and 3%.

5. Method according to any one of claims 1 to 4, wherein the gas collection system is continuously sucked with such a constant high suction volume flow that a pressure of less than 100 mbar, in particular from 0,1 mbar to 100 mbar, below the ambient pressure of the landfill (1), is set in the landfill body (3).

6. Method according to any one of claims 1 to 5, wherein the landfill comprises a qualified surface sealing system according to a landfill regulation.

7. Method according to any one of claims 1 to 6, wherein the gas collection system comprises a plurality of gas collection elements (10) and the method is carried out with only a part of the gas collection elements (10), wherein a landfill gas is extracted from the other part of the gas collection elements (10) as supporting gas with such a suction volume flow that the supporting gas has a volume fraction of methane V_{SG} (CH₄) of at least 20%, in particular of at least 30%.

8. Method according to claim 7, wherein the landfill gas mixed from both parts has a volume fraction of methane V_{ges} (CH₄) of at most 10%, in particular of at most 5%.

9. Method according to any one of claims 1 to 8, wherein the landfill (1) comprises in the region of the surface sealing (7) a gas distributing layer (9) so that during suction of the gas collection elements additional outside air is flown through vertically from top to bottom - from the gas distributing layer (9) over the landfill body (3) to the gas collectors (10).

## Revendications

1. Procédé d'aspiration contrôlée d'un gaz de décharge d'une décharge de déchets (1) contenant des déchets organiques, comportant l'étape consistant à :
aspirer de manière continue, contrôlée et ciblée du gaz de décharge à l'aide d'un système de captage de gaz de la décharge de déchets de sorte que le potentiel de réaction organique dans la décharge de déchets soit dégradé principalement par voie aérobie, l'apport en oxygène de l'air requis à cet effet, l'alimentation en oxygène et la distribution de l'oxygène s'effectuant exclusivement dans une zone de dépression et ainsi un déplacement de l'équilibre CH₄-CO₂ dans la masse de déchets de la décharge pouvant avoir lieu à l'égard du CO₂, sans introduire d'air dans la masse des déchets mis en décharge (3) dans la zone de dépression, l'oxygène requis pour le changement des conditions de dégradation étant fourni en aspirant l'air ambiant dans la masse des déchets mis en décharge (3) et ainsi une alimentation en oxygène se produisant d'elle-même par le biais de l'aspiration, des emplacements d'entrée d'air de la décharge de déchets étant toutes les liaisons gazeuses avec l'atmosphère, le système de captage de gaz comportant une pluralité d'éléments de captage de gaz (10), les éléments de captage de gaz (10) étant des brûleurs à gaz et/ou des lances à gaz,
et le procédé est uniquement mis en oeuvre avec une partie des éléments de captage de gaz (10), le gaz de décharge aspiré avec l'autre partie des éléments de captage de gaz (10) assurant une valorisation des gaz et la décharge de déchets comportant, à la base de la décharge, un système d'évacuation des eaux avec un filtre de surface (4) et des tuyaux de drainage (5), de sorte que le système de drainage et le filtre de surface (4) de la décharge de déchets sont aptes à entrer en contact avec l'air extérieur est qu'ainsi la masse des déchets mis en décharge (3) s'écoule totalement de bas en haut avec l'air extérieur à l'aide des éléments de captage de gaz (10) et est traitée en aérobie.

2. Procédé selon la revendication 1, dans lequel les emplacements d'entrée d'air de la décharge de déchets sont le système complet d'évacuation des eaux à la base de la décharge et/ou une couche de distribution de gaz (9) et/ou des emplacements de fuite d'une couverture/d'un système d'étanchéité de surface (7) et/ou des emplacements et/ou des surfaces de sortie de gaz et/ou des emplacements de pénétration de la masse des déchets mis en décharge, en particulier des gaines de chemin de câbles, des fourreaux de câbles, des regards d'égout et/ou des canalisations d'égout.

3. Procédé selon la revendication 1 ou la revendication 2, dans lequel le système de captage de gaz fait l'objet d'une aspiration de manière continue à un débit volumique d'aspiration élevé constant, de sorte qu'un rapport V(CH₄)/V(CO₂) inférieur à 1, en particulier compris entre 0,1 et 1, soit obtenu et que la masse des déchets mis en décharge soit maintenue dans une zone de dépression, V(CO₂) et V(CH₄) étant respectivement les fractions volumiques de dioxyde de carbone et de méthane dans le débit volumique d'aspiration.

4. Procédé selon l'une des revendications 1 à 3, dans lequel le système de captage de gaz fait l'objet d'une aspiration de manière continue à un débit volumique d'aspiration élevé constant, de sorte que la fraction volumique d'oxygène V(O₂) dans le débit volumique d'aspiration est comprise entre 0,1 % et 5 %, en particulier entre 0,1 % et 3 %.

5. Procédé selon l'une des revendications 1 à 4, dans lequel le système de captage de gaz fait l'objet d'une aspiration de manière continue avec à débit volumique d'aspiration élevé constant, de sorte qu'une dépression inférieure à 100 mbar, en particulier de 0,1 mbar à 100 mbar, inférieure à la pression ambiante de la décharge (1), s'établit dans la masse des déchets mis en décharge (3).

6. Procédé selon l'une des revendications 1 à 5, dans lequel la décharge de déchets comporte un système d'étanchéité de surface qualifié en vertu d'un décret sur les décharges.

7. Procédé selon l'une des revendications 1 à 6, dans lequel le système de captage de gaz comporte une pluralité d'éléments de captage de gaz (10) et le procédé est uniquement mis en oeuvre avec une partie des éléments de captage de gaz (10), un gaz de décharge qui fait office de gaz vecteur étant aspiré à partir de l'autre partie des éléments de captage de gaz (10) avec un débit volumique d'aspiration, de sorte que le gaz vecteur a une fraction volumique de méthane V_{SG}(CH₄) d'au moins 20 %, en particulier d'au moins 30 %.

8. Procédé selon la revendication 7, dans lequel le gaz de décharge mélangé à partir des deux parties a une fraction volumique de méthane V_{ges}(CH₄) de 10% maximum, en particulier de 5 % maximum.

9. Procédé selon l'une des revendications 1 à 8, dans lequel la décharge de déchets (1) comporte une couche de distribution de gaz (9) dans la zone du système d'étanchéité de surface (7), de sorte que de l'air extérieur s'écoule de plus verticalement du haut en bas lorsque les éléments de captage de gaz sont aspirés - depuis la couche de distribution de gaz (9) au-dessus de la masse des déchets mis en décharge (3) jusqu'aux collecteurs de gaz (10).
